# FASCICULE DE BREVET EUROPEEN

(11) **EP 0 416 998 B1**
(45) Date de publication et mention de la délivrance du brevet: **05.01.1994**
(21) Numéro de dépôt: 90402441.1
(22) Date de dépôt: 05.09.1990
(51) Int. Cl.: B60Q 1/00

(54) **Projecteur de véhicule automobile à moyens de réglage en site perfectionnés**
Vorrichtung zum Einstellen der Neigung der Scheinwerfer eines Fahrzeuges
Device for adjusting the inclination of the headlight of a vehicle

(30) Priorité: 07.09.1989 FR 8911712
(43) Date de publication de la demande: 13.03.1991
(73) Titulaire: VALEO VISION, 93000 Bobigny (FR)
(72) Inventeur: Chevance, Gérard, F-77200 Torcy (FR)
(74) Mandataire: Martin, Jean-Jacques

(56) Documents cités:
- DE-A- 3 802 104
- FR-A- 2 618 108

## Description

La présente invention a trait au domaine du réglage de l'orientation des projecteurs de véhicules automobiles.

Classiquement, l'obtention d'un faisceau de photométrie souhaitée s'obtient en formant un faisceau de base avec le réflecteur et en "travaillant" des parties bien déterminées de ce faisceau avec des prismes ou stries appropriés formés dans des zones homologues de la glace.

Plus particulièrement, mais non exclusivement, les réflecteurs des projecteurs modernes comportent des surfaces optiques définies mathématiquement, qui permettent d'obtenir un faisceau de configuration et de photométrie souhaitée sans faire intervenir de moyens d'occultation. En coopération avec ce genre de surface, des déviations faibles et bien déterminées doivent être assurées par la glace de fermeture du projecteur pour donner au faisceau sa forme finale.

Ainsi à des zones bien déterminées du réflecteur sont associées des zones également bien déterminées de la glace qui comportent des éléments déviateurs ou répartiteurs du flux lumineux ayant une configuration propre.

Par ailleurs, il doit exister dans un projecteur la possibilité de modifier la direction du faisceau, en site et éventuellement en azimut, sans qu'à cette occasion le faisceau soit d'une quelconque manière dégradé. En d'autres termes, il est nécessaire d'assurer autant que possible que, lors des faibles pivotements impartis au réflecteur pour régler la direction d'émission, les zones de déviation de la glace ou de l'écran restent bien en vis-à-vis des portions de faisceau émises par les zones associées du réflecteur, sans quoi le faisceau sera inévitablement altéré.

La solution optimale, bien connue, à ce problème, consiste à utiliser pour effectuer la déviation un écran intermédiaire, la glace de fermeture étant quant à elle par exemple essentiellement lisse. Dans ce cas, l'écran est monté rigidement sur l'ouverture du réflecteur, si bien que les zones homologues de ces deux pièces sont toujours en vis-à-vis, et le réglage d'orientation s'effectue en les faisant pivoter de concert. Le document FR-A-2 254 956 enseigne un projecteur de ce type, et montre les caractéristiques du préambule de la revendication 1.

Cependant, il existe des situations dans lesquelles la présence d'un écran intermédiaire n'est pas souhaitable. Ce peut être pour des raisons d'économie, de style ou encore de photométrie, notamment dans ce dernier cas lorqu'on souhaite éviter les pertes de lumière, typiquement de l'ordre de 10 à 20%, au niveau de l'écran. Dans ce cas, les stries et/ou prismes de déviation sont implantés sur la glace de fermeture, fixe, tandis qu'on fait pivoter le réflecteur seul pour le réglage d'orientation, et l'on retrouve le problème de-décalage évoqué plus haut.

Et ce problème est d'autant plus sensible que les projecteurs modernes, pour des raisons de style et d'aérodynamisme, voient leur glace située à la transition entre l'avant du véhicule et l'aile et donc fortement inclinée par rapport à un plan perpendiculaire à l'axe optique, cet angle pouvant atteindre 45°. Cela signifie qu'au moins certaines zones de la glace sont sensiblement éloignées du réflecteur et du ou des axes de pivotement de celui-ci, et que le réglage d'orientation va provoquer, pour ces zones, des décalages d'autant plus importants et donc indésirables entre lesdites zones et les portions du faisceau qui doivent les traverser. La photométrie du faisceau en sortie de la glace est donc excessivement altérée.

La présente invention vise à pallier ces inconvénients de la technique antérieure.

Elle propose à cet effet un projecteur de véhicule automobile tel que défini dans la revendication 1.

De cette manière, la distance entre la charnière horizontale et la glace est minimisée sur toute l'étendue de celle-ci, et il en est de même des décalages entre les diverses parties du faisceau et les zones homologues de la glace, et donc des défauts optiques.

Des aspects préférés du projecteur selon l'invention sont exposés dans les sous-revendications.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels des éléments ou parties identiques ou similaires sont désignés par les mêmes signes de référence.

Sur les dessins :
la figure 1 est une vue en coupe horizontale schématique d'un projecteur bi-miroir sur laquelle est illustré le principe de l'invention,
la figure 2 est une vue en coupe horizontale d'une forme de réalisation concrète d'un projecteur bi-miroir selon l'invention,
la figure 3 est une vue en coupe verticale selon la ligne III-III de la figure 2; et
la figure 4 est une vue de face schématique du projecteur des figures 2 et 3.

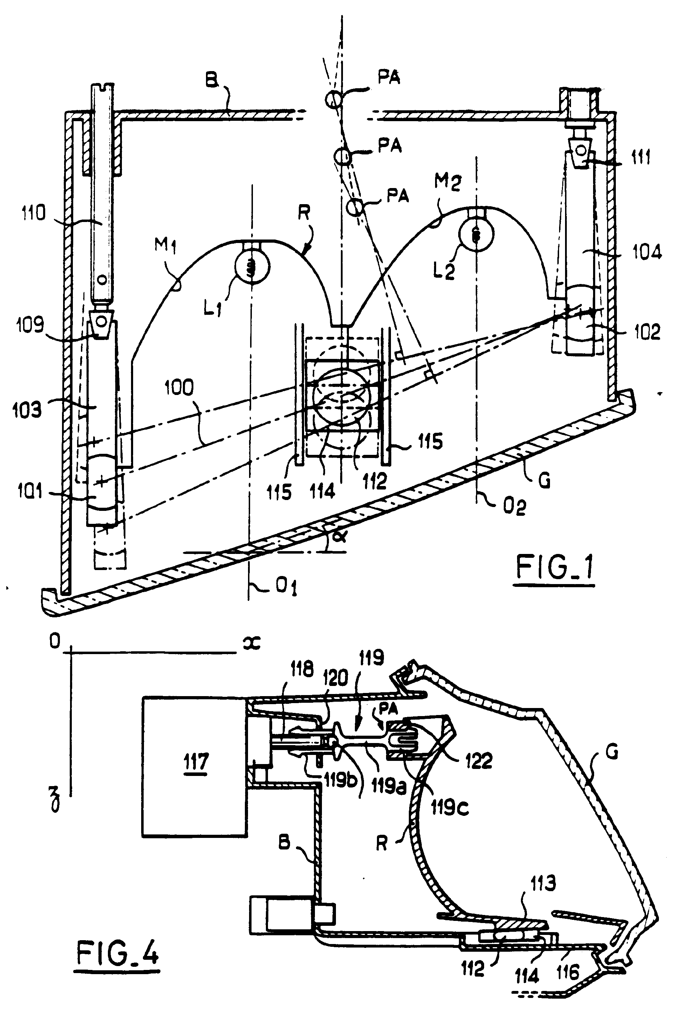

En référence tout d'abord à la figure 1, on a illustré schématiquement un projecteur de véhicule comportant, dans un boîtier B, deux lampes L1, L2, un corps de réflecteur unique R comportant côte-à-côte deux miroirs M1 et M2 respectivement associés aux deux lampes, et une glace de fermeture G fermant le boîtier à l'avant.

On peut observer sur la figure 1 que le profil de la glace en section horizontale est sensiblement incliné par rapport à la perpendiculaire aux axes optiques O1 et O2 définis respectivement par les deux ensembles lampe/réflecteur, l'angle d'inclinaison α étant ici de l'ordre de 30°.

L'ensemble constitué par le réflecteur et les lampes peut subir des variations d'orientation à des fins de réglage ou de correction de la direction de référence des faisceaux émis. Typiquement, il est prévu des moyens pour régler les faisceaux en direction latérale par pivotement autour d'unecharnière verticale, ce réglage s'effectuant en principe une fois pour toutes après le montage du bloc optique sur le véhicule. Il est prévu en outre des moyens pour effectuer le réglage de base et la correction des faisceaux en direction verticale par pivotement autour d'une charnière horizontale, la correction s'effectuant par exemple en fonction des variations d'assiette du véhicule, soit de façon manuelle, soit par pilotage depuis l'habitacle, soit de façon automatique.

La glace G comporte de façon non illustrée des prismes et/ou stries de déviation des faisceaux lumineux formés, en des emplacements bien déterminés, et il est clair que les divers réglages et corrections vont engendrer un balayage, en direction horizontale et verticale, des faisceaux sur la glace G.

Conformément à l'invention, on limite l'amplitude de ce balayage, c'est-à-dire l'écart entre des portions des faisceaux normalement associées à des zones déviatrices déterminées de la glace et ces zones déviatrices, en rapprochant globalement la charnière horizontale de la glace dans toute la mesure du possible. De plus, étant donné que la hauteur de chaque miroir est tributaire du balayage vertical de la glace par les faisceaux, et que, dans une section verticale donnée, l'amplitude de ce balayage est proportionnelle à la distance entre la charnière horizontale et la glace, cette charnière horizontale est conformément à l'invention disposée essentiellement parallèlement à la glace.

En référence maintenant à l'ensemble des figures, on va décrire des moyens préférés pour assurer les divers maintiens et degrés de liberté du réflecteur R nécessaires en relation avec les caractéristiques ci-dessus.

On a représenté sur les figures un système d'axes tridimensionnel (x,y,z), x étant parallèle aux axes optiques, z étant vertical et y étant perpendiculaire à x et z.

Le maintien du réflecteur R selon l'axe z est assuré en matérialisant la charnière horizontale (ligne 100 en traits mixtes) par deux rotules sphériques 101 et 102 qui sont solidaires du réflecteur R dans la région inférieure des bords latéraux de celui-ci et qui sont engagées dans des logements complémentaires de deux biellettes 103 et 104 d'orientation générale parallèle à l'axe x et qui peuvent coulisser dans deux glissières horizontales 105 et 106 définies, par exemple par moulage, dans les surfaces latérales intérieures en vis-à-vis, notées 107 et 108, du boîtier B.

On notera ici que les biellettes 103 et 104 et leurs glissières 105 et 106 sont conçues pour empêcher le mouvement des biellettes et des rotules vers le haut et vers le bas, tout en autorisant dans une certaines mesure leur déplacement latéralement selon y, à des fins expliquées plus loin.

Le maintien du réflecteur R selon l'axe x est assuré par l'appui des extrémités arrières des biellettes sur des appuis clipsables du genre cloquages disposés au droit de celles-ci. Un premier cloquage 109 est solidaire d'une vis 110 de réglage des faisceaux en direction latérale, tandis que l'autre cloquage 111 est relié rigidement au boîtier.

Le bord antérieur du réflecteur R est sensiblement parallèle à la glace G, les rotules sphériques 101 et 102 étant disposées aussi près d'elle que la construction le permet. La charnière horizontale 100 est donc disposée le long de la glace, en oblique par rapport à la direction y (typiquement selon un angle de 20 à 40°). Il s'en suit que lorsqu'on effectue le réglage des faisceaux en direction latérale, par action sur la vis 110, l'encombrement frontal du réflecteur, selon y, varie sensiblement.

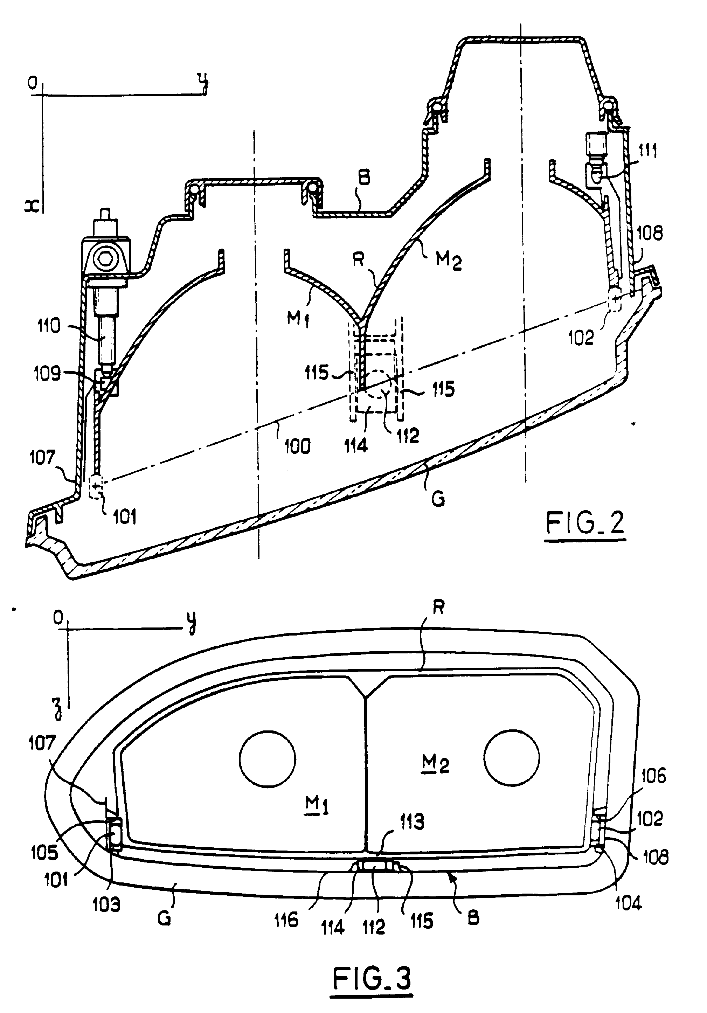

C'est pour autoriser ces variations d'encombrement que, comme indiqué plus haut, les glissières 105 et 106 formées dans le boîtier n'assurent pas le maintien latéral des biellettes associées, et il en résulte que les moyens décrits jusqu'ici ne sont pas à même d'assurer le maintien latéral du réflecteur R. Celui-ci est assuré par un dispositif comprenant une troisième rotule sphérique 112, disposée sous la joue inférieure 113 du réflecteur R dans la région médiane de celui-ci, et solidaire dudit réflecteur. Cette rotule est engagée dans un patin 114 qui est guidé pratiquement sans jeu selon l'axe x par une glissière 115 formée, et par exemple venue de moulage, dans la paroi inférieure 116 du boîtier B. En outre, dans le cas présent, le centre de cette rotule sphérique 112 n'étant pas disposé sur la charnière horizontale 100, comme le montre bien la figure 3, la glissière 115 est conçue pour autoriser dans une mesure limitée le débattement vertical du patin 114, étant donné que le réglage des faisceaux en hauteur, par pivotement autour de 100, va induire de faibles variations de hauteur de la rotule 112 et de son patin 114.

On a illustré sur la figure 1, respectivement en traits mixtes, en traits pleins et en traits tiretés, trois positions des rotules sphériques 101, 102 et 112, des bielles 103 et 104 et du patin 114 correspondant à trois réglages différents des faisceaux en largeur, les écarts entre les réglages ayant été exagérés par souci de clarté.

Le réglage des faisceaux en hauteur est assuré par action sur le réflecteur R dans la région supérieure de celui-ci, et par exemple, comme illustré, à l'aplomb de la rotule 112.

Dans le présent exemple, il est prévu un dispositif de correction 117 qui est monté rigidement sur la face arrière du boîtier B et qui comporte une tige de réglage/correction 118 qui se déplace, par exemple sous l'action d'un moteur électrique (non représenté) ou par une commande manuelle, ou encore par un dispositif piloté depuis l'habitacle du véhicule, selon l'axe x (figure 4).

Lors des réglages ou corrections en hauteur, tout point du réflecteur R, et en particulier le point PA d'application de la force de réglage, se déplace dans un plan perpendiculaire à la charnière horizontale 100; par ailleurs, selon le réglage en largeur effectué, l'orientation de cette charnière 100 varie. A cet égard, on a illustré sur la figure 1 de façon schématique l'évolution de la position du point d'action PA du réflecteur, schématisé par un cercle, en fonction de l'évolution du réglage des faisceaux en largeur. On comprend donc qu'il est nécessaire d'assurer un degré de liberté approprié, pour l'essentiel selon y, entre la tige de réglage en hauteur 118 et le point d'action de cette tige sur le réflecteur R.

Ce degré de liberté est assuré préférentiellement par un tirant souple 119 entre l'extrémité libre de la tige de réglage 118 et le point d'action PA du réflecteur.

On peut noter ici que, grâce aux divers jeux donnés aux rotules (jeu latéral pour les rotules 101, 102 et jeu vertical pour la rotule 112), et au jeu autorisé par la déformabilité élastique du tirant souple, les divers réglages d'orientation du réflecteur n'impartissent aucune contrainte audit réflecteur. On éviter ainsi avantageusement tout risque de vrillage, de cassure, etc. du réflecteur.

Par ailleurs, selon un aspect auxiliaire de la présente invention, il est prévu des moyens pour permettre l'accouplement et le désaccouplement automatiques entre la tige rigide 118 du dispositif correcteur et le tirant souple 119 lors de la mise en place du dispositif de correction 117 à l'arrière du boîtier et son retrait, car dans le cas d'espèce il n'existe aucune possibilité d'intervention manuelle depuis l'extérieur du boîtier.

Ainsi le tirant 119 se compose d'un élément d'un seul tenant comportant un corps central 119a à l'arrière duquel s'étendent, vers l'arrière, un certain nombre de griffes souples 119b permettant le montage par clipsage du tirant, avec possibilité de déplacement selon l'axe x, sur une petite plaque verticale 120 solidaire du boîtier B. La liaison entre la tige 118 et le tirant 119 s'effectue par un cloquage sphérique 121 prévu à l'extrémité libre de ladite tige et apte à pénétrer dans un logement complémentaire prévu à l'extrémité arrière du corps 119a, entre les griffes 119b. En outre, le tirant 119 comporte à son extrémité avant des pattes souples 119c qui s'engagent dans un canon de liaison 122 prévu à l'arrière du réflecteur.

Lors de l'accouplement, le tirant est retenu par ses griffes sur la plaquette 120 et la sphère 121 de la tige 118 peut pénétrer dans son logement du tirant, par déformation élastique de la matière autour dudit logement. A cet effet, la plaquette 120 est prévue pour laisser passer la tige 118 entre les griffes 119b. Au désaccouplement, le tirant s'appuie sur la plaquette par une surface arrière du corps 119a et la sphère 121 peut quitter son logement.

Il est à noter que les liaisons rigides tirant/tige et tirant/canon du réflecteur, imposées pour des questions d'alignement au montage, imposent au tirant de ne pouvoir se déformer élastiquement que dans une section centrale correspondant pour l'essentiel à son corps central 119a.

Comme on l'a indiqué plus haut, le réglage des faisceaux en direction latérale est effectué par action sur la vis 110, de façon en principe permanente, avec une course de réglage bien déterminée et relativement faible.

En revanche, la course de la tige rigide 118 du dispositif correcteur peut être déterminée en pratique par l'addition de la course de correction (correction manuelle ou automatique en fonction notamment des variations d'assiette du véhicule), de la course de réglage de base en site des faisceaux (déterminant la position absolue de gamme angulaire couverte par la correction), d'une course d'adaptation due à l'incidence du réglage en direction latérale et enfin d'une course additionnelle de retrait pour permettre le désaccouplement entre la tige 118 et le tirant souple 119.

Bien entendu, la présente invention n'est nullement limitée à la forme de réalisation décrite ci-dessus et représentée sur les dessins, mais l'homme de l'art saura y apporter toute variante ou modification conforme à son esprit.

En particulier, bien que la description ci-dessus concerne un projecteur bi-miroir, il est bien entendu que l'invention s'applique également au cas des projecteurs à miroir simple.

## Revendications

1. Projecteur de véhicule automobile, du type comportant un boîtier (B), une lampe (L1,L2) et un réflecteur (R) montés dans le boîtier (B) et définissant un axe optique (O1), et une glace de fermeture (G) sensiblement inclinée par rapport à un plan perpendiculaire à l'axe optique (O1), et comportant en outre des moyens de réglage (110) de l'orientation du réflecteur (R) par pivotement de celui-ci au moins autour d'un axe horizontal (100), alors que la glace (G) reste fixe, caractérisé en ce que ledit axe horizontal (100) est adjacent à la glace (G) et sensiblement parallèle à celle-ci, en étant incliné par rapport à un plan perpendiculaire à l'axe optique (O1).

2. Projecteur selon la revendication 1, caractérisé en ce que ledit axe horizontal (100) est défini par deux rotules (101,102) solidaires du réflecteur (R) et situées dans les régions latérales opposées dudit réflecteur (R), les rotules étant reçues dans des logements complémentaires de pièces (103,104) reliées au boîtier (B).

3. Projecteur selon la revendication 2, caractérisé en ce que les pièces sont des biellettes (103,104) maintenues en haut et en bas par des glissières (105,106) formées dans des parois latérales (107,108) du boîtier (B).

4. Projecteur selon la revendication 3, caractérisé en ce qu'il comprend en outre des moyens de réglage du faisceau par pivotement autour d'un axe vertical, ces moyens comprenant un élément de liaison (110) de longueur réglable selon une direction essentiellement parallèle à l'axe optique (O1) entre au moins l'une des biellettes (103) et le boîtier (B).

5. Projecteur selon la revendication 4, caractérisé en ce que les glissières (105,106) autorisent un jeu latéral des biellettes (103,104) et en ce qu'il est prévu pour le maintien latéral du réflecteur (R) une troisième rotule (112) prévue dans la région inférieure du réflecteur (R) et engagée dans un logement complémentaire d'un patin (114) maintenu latéralement dans une autre glissière (115) formée dans la paroi inférieure (116) du boîtier (B).

6. Projecteur selon la revendication 5, caractérisé en ce que le pivotement du réflecteur (R) autour de l'axe horizontal (100) est déterminé par le mouvement sensiblement parallèlement à l'axe optique (O1) d'une tige de commande (118) et en ce qu'il est prévu entre ladite tige de commande et un point (PA) du réflecteur (R) situé sensiblement à l'aplomb de ladite troisième rotule un tirant souple (119).

7. Projecteur selon la revendication 6, caractérisé en ce qu'il est prévu en outre des moyens pour assurer l'accouplement et le désaccouplement automatiques entre la tige de commande (118) et le tirant souple (119).

8. Projecteur selon la revendication 7, caractérisé en ce que les moyens d'accouplement et de désaccouplement automatiques comprennent une liaison coulissante à mouvement limité (119b,120) entre le tirant (119) et une pièce (120) solidaire du boîtier (B), une course centrale de la tige de commande (118) déterminant le réglage du réflecteur (R) tandis que deux courses extrêmes de la tige (118) déterminent, par appui du tirant (119) sur la pièce, l'accouplement et le désaccouplement.

9. Projecteur selon l'une des revendications précédentes, caractérisé en ce que le réflecteur (R) comporte deux miroirs juxtaposés (M1,M2) comportant chacun une lampe (L1,L2).

## Patentansprüche

1. Kraftfahrzeug-Scheinwerfer, enthaltend ein Gehäuse (B), eine Lampe (L1, L2) und einen Reflektor (R), die im Gehäuse (B) eingebaut sind und eine optische Achse (01) definieren, sowie eine im Verhältnis zu einer lotrechten Ebene zur optischen Achse (01) im wesentlichen geneigte Verschlußscheibe (G), und weiterhin versehen mit Einstellmitteln (110) für die Ausrichtung des Reflektors (R) durch Schwenkbewegung desselben wenigstens um eine horizontale Achse (100), während die Scheibe (G) feststeht, **dadurch gekennzeichnet**, daß die genannte horizontale Achse (100) an die Scheibe (G) angrenzt und im wesentlichen parallel dazu verläuft und gleichzeitig im Verhältnis zu einer lotrechten Ebene zur optischen Achse (01) geneigt ist.

2. Scheinwerfer nach Anspruch 1, **dadurch gekennzeichnet**, daß die genannte horizontale Achse (100) durch zwei Kugelgelenke (101, 102) definiert ist, die fest mit dem Reflektor (R) verbunden sind und in den dem Reflektor (R) gegenüberliegenden Seitenbereichen angeordnet sind, wobei die Kugelgelenke in dazu passenden Aufnahmen für mit dem Gehäuse (B) verbundene Teile (103, 104) sitzen.

3. Scheinwerfer nach Anspruch 2, **dadurch gekennzeichnet**, daß es sich bei den Teilen um Pleuelstangen (103, 104) handelt, die oben und unten durch Gleitschienen (105, 106) festgehalten werden, welche in Seitenwänden (107, 108) des Gehäuses (B) ausgebildet sind.

4. Scheinwerfer nach Anspruch 3, **dadurch gekennzeichnet**, daß er außerdem Mittel zur Einstellung des Lichtbündels durch Schwenkbewegung um eine vertikale Achse enthält, wobei diese Mittel ein Verbindungselement (110) einschließen, dessen Länge entsprechend einer im wesentlichen parallel zur optischen Achse (01) verlaufenden Richtung zwischen wenigstens einer der Pleuelstangen (103) und dem Gehäuse (B) verstellbar ist.

5. Scheinwerfer nach Anspruch 4, **dadurch gekennzeichnet**, daß die Gleitschienen (105, 106) ein seitliches Spiel der Pleuelstangen (103, 104) erlauben und daß für die seitliche Befestigung des Reflektors (R) ein drittes Kugelgelenk (112) im unteren Bereich des Reflektors (R) vorgesehen ist, welches in einen ergänzenden Aufnahmesitz eines Schuhs (114) einrastet, der seitlich in einer weiteren Gleitschiene (115) angebracht ist, die in der Innenwand (116) des Gehäuses (B) ausgebildet ist.

6. Scheinwerfer nach Anspruch 5, **dadurch gekennzeichnet**, daß die Schwenkbewegung des Reflektors (R) um die horizontale Achse (100) durch die im wesentlichen parallel zur optischen Achse (01) verlaufende Bewegung einer Betätigungsstange (118) bestimmt wird, und daß zwischen der genannten Betätigungsstange und einem Punkt (PA) des Reflektors (R), der im wesentlichen senkrecht zum genannten dritten Kugelgelenk angeordnet ist, ein elastisches Zugelement (119) vorgesehen ist.

7. Scheinwerfer nach Anspruch 6, **dadurch gekennzeichnet**, daß außerdem Mittel vorgesehen sind, die das automatische Ein- und Auskuppeln zwischen der Betätigungsstange (118) und dem elastischen Zugelement (119) gewährleisten.

8. Scheinwerfer nach Anspruch 7, **dadurch gekennzeichnet**, daß die Mittel zum automatischen Ein- und Auskuppeln eine Gleitverbindung mit begrenzter Bewegung (119b, 120) zwischen dem Zugelement (119) und einem Teil (120) einschließen, welches fest mit dem Gehäuse (B) verbunden ist, wobei ein zentraler Hub der Betätigungsstange (118) die Einstellung des Reflektors (R) festlegt, während zwei äußerste Hübe der Stange (118) durch Auflage des Zugelements (119) auf dem Teil das Ein- bzw. Auskuppeln bewirken.

9. Scheinwerfer nach einem der vorherigen Ansprüche, **dadurch gekennzeichnet**, daß der Reflektor (R) zwei nebeneinander angeordnete Spiegel (M1, M2) aufweist, die jeweils eine Lampe (L1, L2) enthalten.

## Claims

1. A motor vehicle headlamp of the type comprising a housing (B), a lamp (L1, L2), and a reflector (R), all mounted in the housing (B) and defining an optical axis (O1), together with a closure glass (G) which is substantially inclined with respect to a plane at right angles to the optical axis (O1), and further comprising means (110) for adjusting the orientation of the reflector (R) by pivoting movement of the latter at least about a horizontal axis (100) while the glass (G) remains fixed, characterised in that the said horizontal axis (100) is adjacent to the glass (G) and substantially parallel to the latter, being inclined with respect to a plane at right angles to the optical axis (O1).

2. A headlamp according to Claim 1, characterised in that the said horizontal axis (100) is defined by two knuckles (101, 102) fixed to the reflector (R) and situated in the opposed side regions of the said reflector (R), the knuckles being received in complementary recesses in members (103, 104) which are connected to the housing (B).

3. A headlamp according to Claim 2, characterised in that the said members are in the form of bars (103, 104) which are maintained in upper and lower positions by slides (105, 106) formed in side walls (107, 108) of the housing (B).

4. A headlamp according to Claim 3, characterised in that it further comprises means for adjusting the beam by pivoting movement about a vertical axis, these means comprising a coupling element (110), the length of which is adjustable in a direction essentially parallel to the optical axis (O1) between at least one of the bars (103) and the housing (B).

5. A headlamp according to Claim 4, characterised in that the slides (105, 106) define a lateral clearance for the bars (103, 104), and in that, for the lateral retention of the reflector (R), a third knuckle (112) is provided in the lower region of the reflector (R) and is engaged in a complementary recess in a socket element (114) maintained laterally in another slide (115) formed in the lower wall (116) of the housing (B).

6. A headlamp according to Claim 5, characterised in that the pivoting movement of the reflector (R) about the horizontal axis (100) is determined by the movement of a control rod (118) in a direction substantially parallel to the optical axis (O1), and in that, between the said control rod and a point (PA) of the reflector (R) situated substantially in line with the said third knuckle, a flexible drawbar (119) is provided.

7. A headlamp according to Claim 6, characterised in that means are further provided for automatic coupling and uncoupling as between the control bar (118) and the flexible drawbar (119).

8. A headlamp according to Claim 7, characterised in that the automatic coupling and uncoupling means comprise a sliding linkage (119b, 120) with limited movement between the drawbar (119) and a member (120) which is fixed to the housing (B), with a central portion of the control bar (118) determining the adjustment of the reflector (R), while the two end portions of the rod (118) effect coupling and uncoupling by engagement of the drawbar (119) on the said member.

9. A headlamp according to one of the preceding Claims, characterised in that the reflector (R) includes two juxtaposed mirrors (M1, M2), each of which includes a lamp (L1, L2).
